# EUROPÄISCHE PATENTSCHRIFT

(11) **EP 0 898 744 B1**
(45) Veröffentlichungstag und Bekanntmachung des Hinweises auf die Patenterteilung: **17.11.1999**
(21) Anmeldenummer: 97926963.6
(22) Anmeldetag: 21.05.1997
(51) Int. Cl.: G06F 9/46

(54) **VERFAHREN ZUR SYNCHRONISATION VON PROGRAMMEN AUF UNTERSCHIEDLICHEN COMPUTERN EINES VERBUNDES**
PROCESS FOR THE SYNCHRONISATION OF PROGRAMS ON DIFFERENT COMPUTERS OF AN INTERCONNECTED SYSTEM
PROCEDE DE SYNCHRONISATION DE PROGRAMMES SUR DIFFERENTS ORDINATEURS INTERCONNECTES EN UN SYSTEME

(30) Priorität: 22.05.1996 DE 19620622
(43) Veröffentlichungstag der Anmeldung: 03.03.1999
(73) Patentinhaber: SIEMENS AKTIENGESELLSCHAFT, 80333 München (DE)
(72) Erfinder: OPGENOORTH, Bernd, D-91359 Leutenbach (DE)
(86) Internationale Anmeldenummer: DE9701023
(87) Internationale Veröffentlichungsnummer: WO9744731

(56) Entgegenhaltungen:
- DE-A- 4 101 623

## Beschreibung

In zunehmendem Maß werden Computeranlagen über Kommunikationseinrichtungen miteinander vernetzt. Bei manchen Anwendungen muß der Synchronisation der in einem Verbund zusammengeschlossenen Datenverarbeitungsanlagen besondere Beachtung geschenkt werden.

Dabei können bezüglich der Art der Synchronisation verschiedene Anforderungen bestehen. Zum einen kann die von den Computern eines Verbundes geforderte Synchronität überwiegend zeitlicher Natur sein. In diesem Fall sollen die Computer möglichst parallel arbeiten, d.h. sich bezüglich der Bearbeitung der Befehle eines aktuellen Programmes zeitlich möglichst immer im gleichen Bearbeitungszustand befinden. Die Computer sollen also in jedem Moment jeweils möglichst die gleiche Bearbeitungssequenz verarbeiten.

Über die reine zeitliche Parallelität hinausgehend kann bei der Synchronität von Computern in einem Verbund die zusätzliche Anforderung auftreten, daß die jeweiligen Bearbeitungssequenzen in den Computern auch möglichst den gleichen datentechnischen Bedeutungsinhalt aufweisen sollen. Dies bedeutet, daß die Computer eines Verbundes bei einer annähernd zeitgleichen Befehlsbearbeitung auf Grund von möglichst identischen Ausgangswerten auch möglichst identische Ergebniswerte erzielen sollen. In einem solchen Fall ist im Rahmen der zeitlichen Synchronisation auch der Vergleich der Ausgangswerte bzw. ausgewählter aktueller Bearbeitungswerte der einzelnen Programme auf den Computern von Vorteil.

In der praktischen technischen Anwendung wird es auf Grund von verschiedenartigsten störenden Einflüssen nicht zu erreichen sein, daß die Befehlsverarbeitung in verschiedenen, miteinander vernetzten Computern in einem Verbund über einen längeren Zeitraum eine zeitliche und / oder logisch inhaltliche Synchronität beibehält. Vielmehr müssen in der Regel zyklisch besondere technische Maßnahmen durchgeführt werden, um die Synchronität der Befehlsverarbeitungen in den Computern aufrechtzuerhalten bzw. wieder herzustellen.

Dies ist besonders dann wichtig, wenn die Computer eines Verbundes ein sogenanntes hochverfügbares oder ausfallsicheres System bilden sollen. Beispiele hierfür sind sogenannte "eins von zwei" oder "zwei von zwei" Systeme.

Bei einem "eins von zwei" System zum Beispiel sollen zwei verbundene Computer mit identischen Programmen die gleichen Ausgangsdaten, wie z.B. Meßwerte, unter der Randbedingung einer hohen Computersystemverfügbarkeit bearbeiten. Es muß regelmäßig sichergestellt werden, daß die Bearbeitungszustände der beiden Computer auf Grund von u.U. auch nur geringfügig unterschiedlichen Bearbeitungsgeschwindigkeiten mittelfristig nicht zu stark divergieren. Ferner muß regelmäßig sichergestellt sein, daß beide Computer übereinstimmende Bearbeitungsergebnisse aufweisen. Dies ist Voraussetzung dafür, daß in dem Fall, in dem die beiden Computer z.B. zur Steuerung eines technischen Prozesses eingesetzt werden, welcher eine hohe Verfügbarkeit erfordert, und einer der beiden Computer ausfällt, der andere Computer quasi sprungslos die Steuerung des technischen Prozesses fortführen kann. Bei einem derartigen "eins von zwei" System müssen also die beiden beteiligten Computer durch besondere Sychronisationsmaßnahmen zeitlich synchronisiert werden. Ferner müssen deren aktuelle Bearbeitungsinhalte regelmäßig auf Gleichheit überprüft werden.

Sehr ähnlich zu dem "eins von zwei" Computersystem sind die Bedingungen auch bei einem sogenannten "zwei von zwei" Computersystem. Dabei sollen zwei verbundene Computer mit identischen Programmen die gleichen Ausgangsdaten, wie z.B. Meßwerte, unter der Randbedingung einer hohen Bearbeitungssicherheit bearbeiten. Wird dabei aber eine plötzliche, nicht behebbare Ungleichheit der Bearbeitungsergebnisse detektiert, so ist die gewünschte Ergebnissicherheit nicht mehr gegeben. Bei einer sicherheitsrelevanten Bearbeitung müssen also die Anwenderprogramme auf beiden Computern in einen sicheren Zustand gebracht werden, z.B. den Stop Zustand. Eine weitere Bearbeitung des sicherheitsrelevanten Prozesses ist nicht mehr möglich, da nicht entschieden werden kann, welches Programm auf welchem der beiden Computer im Moment des plötzlichen Auftretens der Ungleichheit die noch "richtigen" Bearbeitungsergebnisse aufwies.

Vergleichbare Randbedingungen liegen auch bei einem sogenannten "zwei von drei" System vor. Bei diesem können die Anforderungen einer Hochverfügbarkeit des Systems zum einen und einer hohen Bearbeitungssicherheit der Daten zum anderen gleichzeitig erfüllt werden. In einem solchen Fall können drei verbundene Computer die gleichen Ausgangsdaten mit Hilfe von identischen Programmen bearbeiten. Auch hierbei muß in regelmäßigen Zeitabständen sichergestellt werden, daß die Bearbeitungszustände der drei Computer nicht zu stark divergieren und daß insbesondere in jedem Computer gleiche Bearbeitungsergebnisse vorliegen. Werden bei einem Vergleich aktueller Bearbeitungsergebnisse Ungleichheiten detektiert, so kann ein Computer als gestört betrachtet werden und muß aus dem Verbund ausscheiden, wenn dessen aktuelles Bearbeitungsergebnis plötzlich und dauerhaft von den übereinstimmenden Bearbeitungsergebnissen der beiden anderen Computer abweicht. Das System gewährt also bei Ausfall eines der drei Computer sowohl Bearbeitungssicherheit als auch Verfügbarkeit. Dieser Vorgang wird auch Mehrheitsentscheidung genannt. Im Anschluß an einen solchen Fall ist das ursprüngliche "zwei von drei" System dann quasi in ein "zwei von zwei" System oder ein "eins von zwei" System zurückgefallen, abhängig davon, ob die beiden verbleibenden Computer des Systems die Daten der jeweiligen Programme mit hoher Ergebnissicherheit oder hoher Verfügbarkeit weiter bearbeiten sollen.

Bei Computersystemen der obigen Art muß durch in der Regel regelmäßig wiederkehrende Maßnahmen die zeitliche Parallelität der internen Bearbeitungsfolge der Befehle sichergestellt bzw. wieder hergestellt werden. Dabei sollen die zu einer derartigen Synchronisierung notwendigen Maßnahmen den normalen Betrieb eines jeden beteiligten Computers möglichst wenig beeinträchtigen und zumindest möglichst schnell ablaufen.

Der Erfindung liegt somit die Aufgabe zugrunde, ein möglichst einfaches, robustes und insbesondere wenig Bearbeitungszeit beanspruchendes Verfahren zur Synchronisation von mindestens zwei Programmen, insbesondere Anwenderprogrammen, auf miteinander verbundenen Computern anzugeben.

Die Aufgabe wird gelöst mit dem im Anspruch 1 angegebenen Synchronisationsverfahren. Weitere, vorteilhafte Ausführungsformen der Erfindung sind in den Unteransprüchen angegeben.

Die Erfindung wird an Hand von in den nachfolgend kurz angeführten Figuren dargestellten Ausführungsbeispielen näher erläutert. Dabei zeigt
- FIG 1 :: beispielhaft zwei Computer, welche über einen Datenbus mittels einer eingerichteten Kommunikationsverbindung einen Verbund bilden,
- FIG 2 :: beispielhaft zwei Computer, welche über einen Datenbus mittels sogenannter Broadcasts Daten austauschen,
- FIG 3 :: einen ersten Zeitablaufplan, an dem der Ablauf des erfindungsgemäßen Synchronisationsverfahrens am Beispiel von zwei Computern eines Verbundes erläutert wird, welche ein sogenanntes "eins von zwei" oder "zwei von zwei" Computersystem bilden können. und
- FIG 4 :: einen zweiten Zeitablaufplan, an dem der Ablauf des erfindungsgemäßen Synchronisationsverfahrens am Beispiel von drei Computern eines Verbundes erläutert wird, welche ein sogenanntes "zwei von drei" Computersystem bilden können.

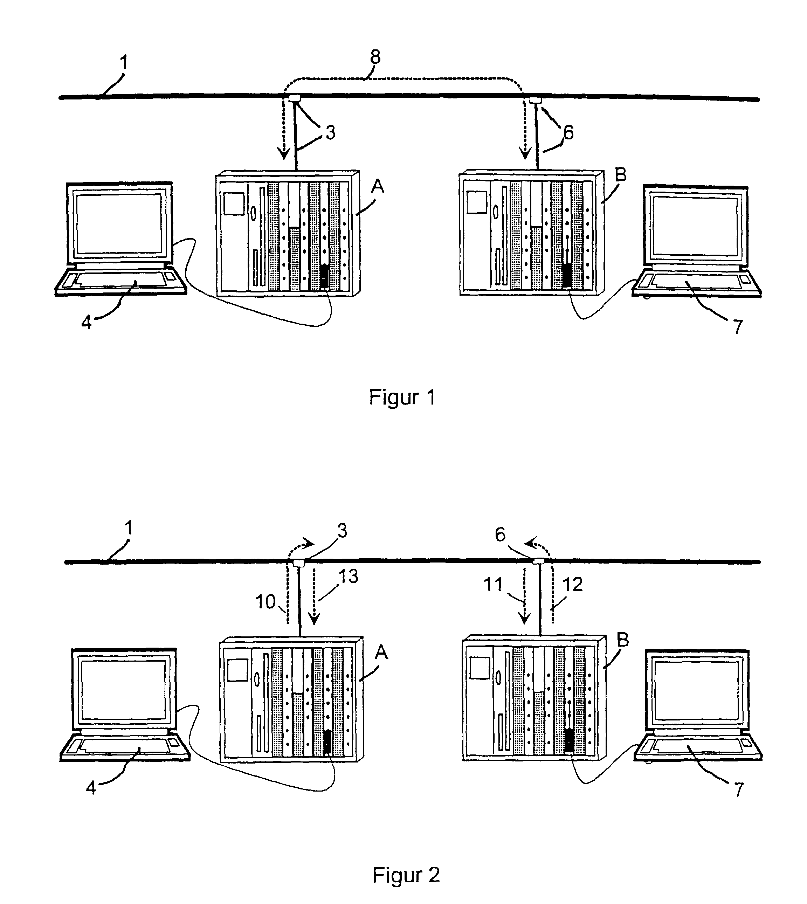

In der Figur 1 ist ein erstes Beispiel für eine Kommunikationsverbindung zwischen zwei Datenverarbeitungsanlagen, nachfolgend abgekürzt Computer genannt, dargestellt. Dabei sind ein erster, über eine Tastatur und einen Bildschirm 4 bedienbarer Computer A über eine erste Ankopplung 3, und ein zweiter, über eine Tastatur und einen Bildschirm 7 bedienbarer Computer B über eine zweite Ankopplung 6 mit einem Datenbus 1 verbunden. Zwischen diesen beiden Computern ist eine stehende Kommunikationsverbindung 8 eingerichtet, welche in Figur 1 durch eine punktierte Linie 8 angedeutet ist. Über eine derartige, feste, verbindungsorientierte Kommunikationsverbindung können dauernd Daten direkt zwischen beiden Computern ausgetauscht werden. Jeder Computer ist darauf eingerichtet, Daten genau an den anderen Computer zu senden bzw. von diesem zu empfangen.

Figur 2 zeigt ein weiteres Beispiel für eine Kommunikationsverbindung zwischen den beiden Datenverarbeitungsanlagen A und B. Dabei ist keine Kommunikationsverbindung fest zwischen beiden Rechnern eingerichtet. Vielmehr basiert diese Kommunikation auf dem sogenannten "Broadcastprinzip". Dabei speist z.B. der Computer A bei Bedarf eine Nachricht 10, d.h. ein sogenanntes Broadcast, in den Datenbus 1 ein. Alle anderen, an dem Datenbus 1 angeschlossenen Computer, im Beispiel der Figur 1 der Computer B und gegebenenfalls weitere, in Figur 1 nicht dargestellte Computer, befinden sich in einer Betriebsart, welche einen Datenempfang über den Datenbus 1 ermöglicht. Alle anderen Computer empfangen zunächst das von Computer A in den Datenbus eingespeiste Broadcast und überprüfen danach, ob die Daten des Broadcasts an sie gerichtet sind oder verwertbare Inhalte aufweisen.

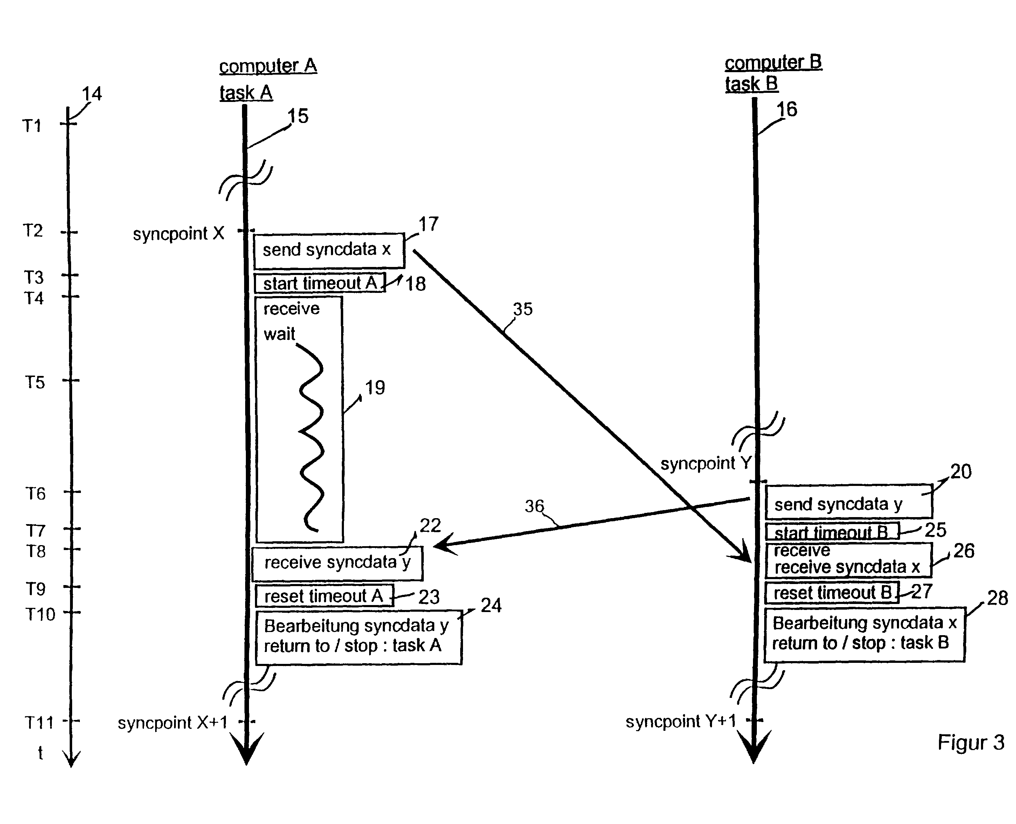

Das erfindungsgemäße Synchronisationsverfahren ist uneingeschränkt zumindest für die beiden, an Hand der Figuren 1, 2 dargestellten Verbindungsarten verwendbar und soll nachfolgend am Beispiel der Figur 3 im Detail erläutert werden.

Im Zeitablaufplan der Figur 3 ist auf der linken Seite eine allgemeine Zeitachse 14 mit Zeitmarken T1 ... T11 dargestellt. Diese Zeitpunkte repräsentieren die Startpunkte von Bearbeitungszuständen der beiden Computer A und B, welche beim Ablauf des erfindungsgemäßen Synchronisationsverfahrens auftreten. Diese Bearbeitungszustände sind für den Computer A auf einer rechts der allgemeinen Zeitachse 14 liegenden Zeitachse 15 und für den Computer B auf einer ganz rechts von Figur 3 liegenden Zeitachse 16 in Form von Funktionskästen dargestellt. Grundsätzlich symbolisieren die Zeitachsen 15,16 für die Computer A, B den Ablauf bzw. den Fortschritt in der Bearbeitung von Befehlen aktueller Programme, insbesondere von Anwenderprogrammen, welche für den Computer A mit task A und für den Computer B mit task B bezeichnet sind. Die für das erfindungsgemäße Synchronisationsverfahren benötigten Bearbeitungszustände werden in den natürlichen Ablauf der Bearbeitung der Befehle von task A und B eingeschoben und bewirken somit jeweils eine zumindest vorübergehende Unterbrechung in der Bearbeitungsfolge der Befehlsanweisungen von task A,B. Das erfindungsgemäße Verfahren hat den Vorteil, daß die durch die Synchronisation bedingten, in den Ablauf der einzelnen tasks eingeschobenen zusätzlichen Bearbeitungszustände möglichst kurz sind. Die beiden, auf den Computern A,B ablaufenden tasks werden also zum Zwecke der wechselseitigen Synchronisation nur so lange wie unbedingt notwendig unterbrochen.

Bei dem in Figur 3 dargestellten Beispiel ist angenommen, daß während des Ablaufes eines tasks in einem Computer Bearbeitungszustände auftreten, d.h. bei der Bearbeitung der Befehle des aktuellen Anwenderprogrammes im Computer z.B. ein Befehl auftritt, wodurch der Ablauf eines Synchronisationsvorganges zwischen beiden Computern angefordert wird. Auf der Zeitachse 15 für Computer A sind dies z.B. die Zeitpunkte T2 = syncpoint X und T11 = syncpoint X+1. In entsprechender Weise sind auf der Zeitachse 16 für Computer B jeweils eine Synchronisation auslösende Zeitpunkte T6 = syncpoint Y und T11 = syncpoint Y+1 vorhanden. Es sei aus Gründen einer vereinfachten Erläuterung der Erfindung zunächst beispielhaft zusätzlich angenommen, daß die in den Computern A und B ablaufenden tasks A und B jeweils aus übereinstimmenden Ketten von Befehlsanweisungen bestehen, d.h. daß folglich von den Computern A,B die gleichen Anwenderprogramme bearbeitet werden. Dies bedeutet, daß z.B. die zu den Synchronisationszeitpunkten T2 = syncpoint X und T6 = syncpoint Y gehörigen Bearbeitungszustände in den jeweiligen tasks A,B inhaltlich identisch sind. Im Beispiel der Figur 3 ist jedoch die Bearbeitung dieser tasks auf den Computern A und B zeitlich auseinander gelaufen, d.h. die Bearbeitung erfolgt nicht mehr annähernd zeitgleich bzw. synchron. Dies ist in Figur 3 daran zu erkennen, daß der syncpoint X in task A zum Zeitpunkt T2 zeitlich früher als der entsprechende syncpoint Y in task B zum Zeitpunkt T6 auftritt.

Der im Zeitpunkt T2 ausgelöste Synchronisationsvorgang ist somit erforderlich. Dieser wird erfindungsgemäß damit eingeleitet, daß derjenige Computer des Verbundes, im Beispiel der Figur 3 der Computer A, als erster während der Bearbeitung des entsprechenden tasks an einen Synchronisationspunkt gelangt, d.h. bei der Befehlsbearbeitung einen Befehl erreicht, der eine Synchronisation mit einem anderen Computer oder den anderen Computern des Verbundes anfordert. Dabei wird im Zeitpunkt T2 die weitere Bearbeitung der Befehle des aktuellen Anwenderprogrammes zunächst vom Computer A unterbrochen und zumindest ein Satz von Synchronisationsdaten für mindestens einen anderen Computer des Verbundes in die Datenschnittstelle eingespeist. Im Beispiel der Figur 3 ist dies durch den Bearbeitungsblock 17 dargestellt, welcher mit "send syncdata x" beschriftet ist, und einen davon abgehenden Pfeil 35 aufweist.

Erfindungsgemäß schaltet der die Synchronisation auslösende Computer unmittelbar nach Einspeisung des Synchronisationsdatensatzes sofort in einen Empfangszustand um, d.h. in eine die Entgegennahme entsprechender Datensätze von Programmen auf anderen Computern des Verbundes ermöglichende Betriebsart. Insbesondere wird im Rahmen der Einspeisung des Synchronisationsdatensatzes vom Programm des sendenden Computers für einen Abschluß des Einspeisungsvorganges keine Entgegennahme von Quittierungsmeldungen von den Programmen auf empfangenden Computern des Verbundes erwartet. Vielmehr wird nach Einspeisung des Synchronisationsdatensatzes sofort auf einen Datenempfangszustand umgeschaltet und die weitere Bearbeitung des aktuellen tasks bis zum Eintreffen insbesondere eines entsprechenden Synchronisationsdatensatzes von einem Programm eines anderen Computer des Verbundes unterbrochen. In Figur 3 ist dies durch den mit "receive wait" bezeichneten Bearbeitungsblock 19 auf der Zeitachse 15 von Computer A symbolisiert.

Zur Reduktion der Menge der im Rahmen der Synchronisation auszutauschenden und zu vergleichenden Daten kann durch eine sogenannte Signaturbildung der Umfang der zu transferierenden Daten deutlich reduziert werden. Bei der Bildung einer Signatur wird ein Datensatz durch eine Art von Komprimierung auf eine eindeutig kennzeichnende Kennung reduziert, welche eine im Vergleich zum Datensatz sehr viel kleinere Größe aufweisen kann.

Während dieses mit ,,receive wait" bezeichneten Bearbeitungsblocks 19, welcher auch als ein sogenannter "Wartezustand mit Empfangsbereitschaft" angesehen werden kann, schreitet die Bearbeitung der Befehle des Anwenderprogrammes "task B" auf dem Computer B voran und erreicht im Zeitpunkt T6 einen entsprechenden, mit "syncpoint Y" bezeichneten Synchronisationszeitpunkt. Erfindungsgemäß unterbricht nun auch der Computer B die Bearbeitung der Befehlsanweisungen des aktuellen Anwenderprogrammes und speist einen Synchronisationsdatensatz in den Datenbus ein. Dieser ist in Figur 3 durch den mit "send syncdata Y" bezeichneten Bearbeitungsblock 20 auf der Zeitachse 16 von Computer B und einen davon ausgehenden Pfeil 36 symbolisiert. Bevorzugt unmittelbar nach der Einspeisung des Synchronisationsdatensatzes schaltet Computer B in einen Daten empfangenden Zustand. Da der im Beispiel andere Computer A des Verbundes bereits im Zeitpunkt T2 seinen Synchronisationsdatensatz eingespeist hat, tritt nach Umschaltung von Computer B in den Bearbeitungszustand "receive" keine "wait" Phase auf, sondern es kann der bereits anstehende Synchronisationsdatensatz syncdata x vom Computer A unmittelbar entgegen genommen werden. Dies ist in Figur 3 im Zeitpunkt T8 durch den mit "receive/receive syncdata x" bezeichneten Bearbeitungsblock 26 auf der Zeitachse 16 von Computer B symbolisiert.

Andererseits wird der vom Computer B abgesetzte Synchronisationsdatensatz nach Ablauf der in Figur 3 durch den Pfeil 36 dargestellten Übertragungszeit von dem im Betriebszustand "receive" verharrenden Computer A sofort empfangen, was durch den mit ,,receive syncdata y" bezeichneten Bearbeitungsblock 22 auf der Zeitachse 15 von Computer A symbolisiert ist. Hierdurch wird somit dessen "wait" Zustand beendet. Auf Grund der in aller Regel relativ geringen Übertragungsdauer des Synchronisationsdatensatzes "syncdata y" beginnt dieser Empfang ebenfalls annähernd im Zeitpunkt T8. Es ist nun zwischen beiden Computern A und B eine annähernde Synchronität von deren Bearbeitungszuständen erreicht, und eine weitere Befehlsbearbeitung erfolgt somit annähernd zeitgleich, so daß das angestrebte Synchronisationsziel erreicht ist.

Vorteilhaft wird von beiden Computern jeweils im Zeitpunkt T10 eine Analyse des jeweils empfangenen Synchronisationsdatensatzes vorgenommen. Für den Computer A ist dies auf der Zeitachse 15 durch den Bearbeitungsblock 24 "Bearbeitung sync data y", und den Computer B ist dies auf der Zeitachse 16 durch den Bearbeitungsblock 28 "Bearbeitung sync data x" dargestellt. Auch diese beiden Bearbeitungen laufen nun annähernd zeitgleich ab.

Für das erfindungsgemäße Synchronisationsverfahren spielt der Inhalt des jeweiligen Synchronisationsdatensatzes keine Rolle. Im einfachsten Fall können die wechselseitig übertragenen Synchronisationsdatensätze syncdata x und syncdata y z.B. jeweils aus einem einzigen Bit bestehen. Dieses hat die Funktion einer Zeitmarke. Bereits damit kann eine zeitliche Synchronisation der Bearbeitungszustände von Computern unter Anwendung des erfindungsgemäßen Verfahrens erreicht werden. Darüber hinausgehend können die Synchronisationsdatensätze selbstverständlich beliebige zusätzliche Informationen beinhalten, die z.B. zum Abgleich von Bearbeitungsergebnissen der beiden Computer dienen können. Im Beispiel der Figur 3 kann z.B. durch einen Vergleich des Synchronisationsdatensatzes syncdata x von Computer A mit dem Synchronisationsdatensatz syncdata y von Computer B im Bearbeitungsblock 24 ( "Bearbeitung syndata y" ) abhängig vom Vergleichsergebnis entweder eine Fortsetzung der Bearbeitung der Befehlsanweisungen des unterbrochenen tasks A ausgelöst werden ( "return to / ... : task A" ), insbesondere wenn eine Übereinstimmung der beiden Synchronisationsdatensätze erkannt wurde. Andererseits kann insbesondere bei Vorliegen einer Ungleichheit die weitere Bearbeitung unterbrochen bzw. nicht mehr aufgenommen werden ( " ... / stop : task A" ). In der gleichen Weise kann durch einen Vergleich des Synchronisationsdatensatzes syncdata y von Computer B mit dem empfangenen Synchronisationsdatensatz syncdata x von Computer A im Bearbeitungsblock 28 ( "Bearbeitung syncdata x" ) entweder eine Fortsetzung der Bearbeitung der Befehlsanweisungen des unterbrochenen tasks B ausgelöst werden ( "return to / ... : task B" ), oder die weitere Bearbeitung endgültig abgebrochen werden( " ... / stop : task B" ).

Das erfindungsgemäße Verfahren hat den besonderen Vorteil, daß die Synchronisation besonders schnell ablaufen kann, da von den Computern im Verbund, welche Synchronisationsdaten in die Datenschnittstelle einspeisen, keine, z.B. den ordnungsgemäßen Empfang dieser Daten durch einen anderen Computer im Verbund quittierende Rückmeldungen notwendig sind und erwartet werden. Vielmehr "antwortet" quasi ein anderer Computer des Verbundes, in dem er selbst Synchronisationsdaten in die Datenschnittstelle einspeist. Auf diese Weise ist mit minimalen zeitlichen Verlusten und einer minimalen zusätzlichen Belastung der Datenübertragungsstrecke zwischen den Computern eines Verbundes auf Grund der zusätzlich ausgetauschten Synchronisationsdatensätze eine sehr effektive Synchronisation erreichbar. Im Beispiel der Figur 3 ist diese erreichte oder wiederhergestellte Synchronisation durch je einen weiteren, im Zeitpunkt T11 nahezu zeitgleich sowohl im Ablauf der Befehlsanweisungen von task A auf der Zeitachse 15 als auch im Ablauf der Befehlsanweisungen von task B auf der Zeitachse 16 auftretenden Synchronisationszeitpunkt "syncpoint x+1" bzw. "syncpoint y+1" dargestellt.

Gemäß einer weiteren Ausführungsform der Erfindung wird vorteilhaft von einem Computer nach Einspeisung von zumindest einem Satz von Synchronisationsdaten für mindestens einen anderen Computer des Verbundes eine Ablaufzeit gestartet, und es werden von dem einen Computer für den Fall, daß bis zum Ende der Ablaufzeit kein Satz von Synchronisationsdaten von mindestens einem anderen Computer empfangen werden konnte, vorgegebene Befehlsanweisungen ausgeführt, insbesondere eine Meldung generiert oder die normale Befehlsbearbeitung fortsetzt. Diese Maßnahme dient zur Sicherheit dagegen, daß ein, eine Synchronisation anfordernder Computer bei Auftreten eines Fehlers in einem anderen Computer des Verbundes nicht dauernd und u.U. vergeblich auf das Eintreffen eines Synchronisationsdatensatzes von diesem anderen Computer wartet. Konnte mit Erreichen des Endes der vorgegebenen Ablaufzeit von dem Computer, der durch Einspeisung eines eigenen Synchronisationsdatensatzes eine Synchronisation anfordert, kein Synchronisationsdatensatz eines anderen Computers empfangen werden, so können von dem anfordernden Computer geeignete Maßnahmen eingeleitet werden. Es kann z.B. der Versuch der Synchronisation mit anderen Computern des Verbundes abgebrochen und die für die Dauer des Synchronisationsversuches ausgesetzte Bearbeitung der Befehle des jeweils aktuellen Anwenderprogrammes fortgesetzt werden.

Im Beispiel der Figur 3 ist diese Ausführung der Erfindung bereits dargestellt. So wird zum einen von Computer A im Zeitpunkt T3 unmittelbar im Anschluß an die Einspeisung des Synchronisationsdatensatzes "send syncdata x" eine derartige Ablaufzeit im Bearbeitungsblock 18 "start timeout A" gestartet. Da ein anderer Synchronisationsdatensatz, im dargestellten Beispiel syncdata y von Computer B, im Zeitpunkt T8 nach Ablauf einer gewissen Wartezeit "wait" dennoch rechtzeitig empfangen werden konnte, wird die Ablaufzeit mit Erreichen des Zeitpunkts T10 im Bearbeitungsblock 23 "reset timeout A" wieder rückgesetzt. In der gleichen Weise wird von Computer B im Zeitpunkt T7 unmittelbar im Anschluß an die Einspeisung des Synchronisationsdatensatzes "send syncdata y" eine derartige Ablaufzeit im Bearbeitungsblock 25 "start timeout B" gestartet. Da Computer B, wie oben schon erläutert wurde, den bereits anstehenden Synchronisationsdatensatz syncdata x von Computer A im Bearbeitungsblock 26 sofort entgegennehmen kann, kann die Ablaufzeit unmittelbar im Anschluß daran im Bearbeitungsblock 27 "reset timeout B" bereits wieder rückgesetzt werden.

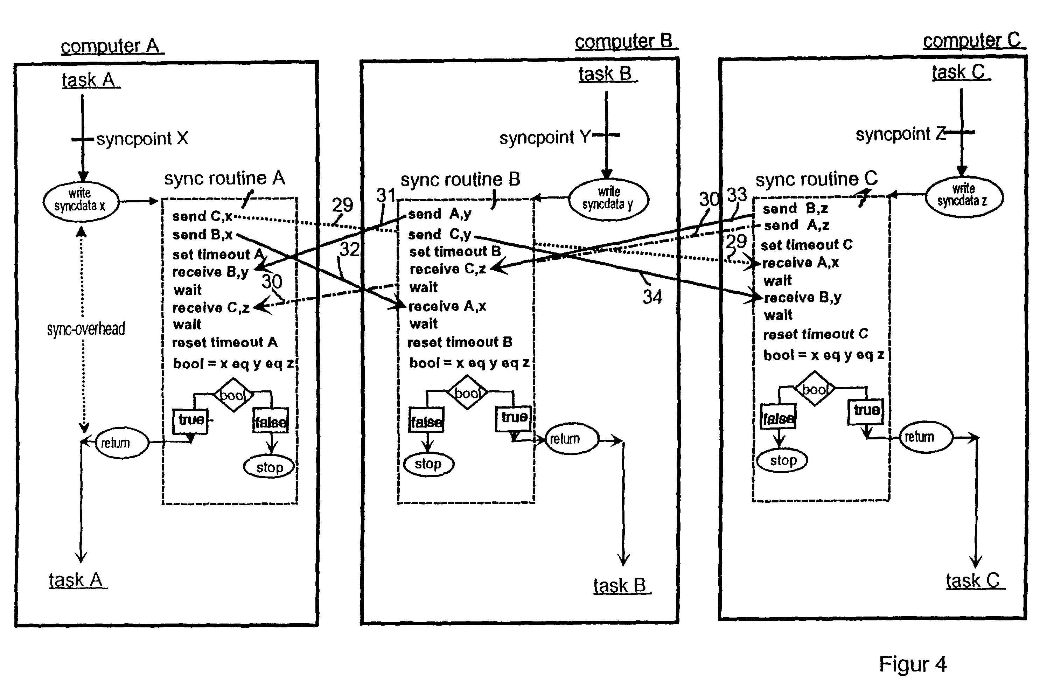

Am Beispiel eines in der Figur 4 dargestellten zweiten Zeitablaufplanes wird für drei Computer eines Verbundes der Ablauf des erfindungsgemäßen Synchronisationsverfahrens erläutert. Das erfindungsgemäße Synchronisationsverfahren ist uneingeschränkt auch für eine größere Anzahl von in einem Verbund zusammengeschalteten Computern anwendbar. Im Beispiel der Figur 4 sind im linken Bereich in einem ersten Bearbeitungsblock für Computer A der Ablauf eines Anwenderprogrammes "task A" und insbesondere einer gemäß der Erfindung aufgebauten Synchronisationsroutine "sync routine A", im mittleren Bereich von Figur 4 in einem zweiten Bearbeitungsblock für Computer B der Ablauf eines Anwenderprogrammes "task B" und insbesondere einer gemäß der Erfindung aufgebauten Synchronisationsroutine "sync routine B" und schließlich im rechten Bereich von Figur 4 in einem dritten Bearbeitungsblock für Computer C der Ablauf eines Anwenderprogrammes "task C" und insbesondere einer gemäß der Erfindung aufgebauten Synchronisationsroutine "sync routine C" dargestellt. Die Computer sind in einem Verbund insbesondere über ein Datennetzwerk miteinander gekoppelt. In einem Anwendungsfall können die Anwenderprogramme task A, task B und task C aus identischen Befehlsanweisungen bestehen, so daß der in Figur 4 dargestellte Verbund dann ein oben bereits erläutertes, sogenanntes "zwei aus drei" Computerverbundsystem darstellt.

Während der normalen Befehlsbearbeitung wird von Computer A, B bzw. C jeweils ein Programmpunkt erreicht, in dem eine Synchronisation mit den anderen Computern im Verbund angefordert und ausgelöst wird. In den Bearbeitungsblöcken von Figur 4 sind dies der Programmpunkt "syncpoint X" im Ablauf von "task A", der Programmpunkt "syncpoint Y" im Ablauf von "task B" und der Programmpunkt "syncpoint Z" im Ablauf von "task C". An jeden dieser Programmpunkte schließt sich jeweils eine Befehlsroutine mit der Bezeichnung "write syncdata x", "write syncdata y" bzw. "write syncdata z" an. Hiermit wird die Bearbeitung des jeweiligen task A, task B bzw. task C unterbrochen, es werden gegebenenfalls temporäre Daten für eine spätere Fortsetzung der Programmbearbeitung zwischengespeichert und es wird vom entsprechenden Computer A, B oder C ein Synchronisationsdatensatz "syncdata x", "syncdata y" bzw. "syncdata z" für die jeweilige Synchronisationsroutine und zur Einspeisung in die Datenschnittstelle generiert.

Die Synchronisationsroutine "sync routine A" von Computer A weist im Beispiel von Figur 4 folgende Befehlsanweisungen auf:
1. send C,x
2. send B,x
3. set timeout A
4. receive B,y
5. wait
6. receive C,z
7. wait
8. reset timeout A
9. bool = x eq y eq z

Die Synchronisationsroutine "sync routine B" von Computer B weist im Beispiel von Figur 4 folgende Befehlsanweisungen auf:
10. send A,y
11. send C,y
12. set timeout B
13. receive C,z
14. wait
15. receive A, x
16. wait
17. reset timeout B
18. bool = x eq y eq z

Die Synchronisationsroutine "sync routine C" von Computer C weist im Beispiel von Figur 4 schließlich folgende Befehlsanweisungen auf:
19. send B,z
20. send A,z
21. set timeout C
22. receive A,x
23. wait
24. receive B,y
25. wait
27. reset timeout C
28. bool = x eq y eq z

Die Bedeutung der einzelnen Befehlsanweisungen 1. bis 28. der Synchronisationsroutinen wird wie folgt erläutert :
1. Computer A speist einen Synchronisationsdatensatz x, welcher an den Computer C des Verbundes gerichtet ist, in die Datenschnittstelle ein ( siehe punktierten Pfeil mit dem Bezugszeichen 29 ).
2. Computer A speist einen Synchronisationsdatensatz x, welcher an den Computer B des Verbundes gerichtet ist, in die Datenschnittstelle ein ( siehe durchgezogenen Pfeil mit dem Bezugszeichen 32 ).
3. Computer A startet eine Ablaufzeit A, innerhalb der ein Empfang der Synchronisationstelegramme y, z der anderen Computer B, C des Verbundes erwartet wird.
4. Computer A schaltet in einen Empfangszustand um und unterbricht die weitere Befehlsbearbeitung.
5. Computer A empfängt einen an ihn gerichteten, von Computer B eingespeisten Synchronisationsdatensatz y ( siehe durchgezogenen Pfeil mit dem Bezugszeichen 31 ).
6. Computer A verbleibt im Empfangszustand und unterbricht weiterhin die Befehlsbearbeitung.
7. Computer A empfängt einen an ihn gerichteten, von Computer C eingespeisten Synchronisationsdatensatz z ( siehe strichpunktierten Pfeil mit dem Bezugszeichen 30 ).
8. Computer A setzt die Ablaufzeit A vor dem Erreichen des vorgegebenen Ablaufzeitpunktes zurück, da in der Zwischenzeit rechtzeitig die erwarteten Synchronisationsdatensätze von Computer B und C empfangen werden konnten.
9. Computer A führt Verarbeitungsoperationen des eigenen Synchronisationsdatensatzes x und der empfangenen Synchronisationsdatensätze y, z durch. Insbesondere wird der Inhalt der Synchronisationsdatensätze x, y, z auf das Vorliegen von Identität überprüft. Tritt das gewünschte Ergebnis bei den Verarbeitungsoperationen auf, so wird die weitere Bearbeitung von task A fortgesetzt. Andernfalls bleibt die Befehlsbearbeitung von task A auf Computer A unterbrochen, und es kann eine anwendungsabhängige Fehlerbehandlung angestoßen werden.
10. Computer B speist einen Synchronisationsdatensatz y, welcher an den Computer A des Verbundes gerichtet ist, in die Datenschnittstelle ein ( siehe durchgezogenen Pfeil mit dem Bezugszeichen 31 ).
11. Computer B speist einen Synchronisationsdatensatz y, welcher an den Computer C des Verbundes gerichtet ist, in die Datenschnittstelle ein ( siehe durchgezogenen Pfeil mit dem Bezugszeichen 34 ).
12. Computer B startet eine Ablaufzeit B, innerhalb der ein Empfang der Synchronisationstelegramme x, z der anderen Computer A, C des Verbundes erwartet wird.
13. Computer B schaltet in einen Empfangszustand um und unterbricht die weitere Befehlsbearbeitung.
14. Computer B empfängt einen an ihn gerichteten, von Computer C eingespeisten Synchronisationsdatensatz z ( siehe durchgezogenen Pfeil mit dem Bezugszeichen 33 ).
15. Computer B verbleibt im Empfangszustand und unterbricht weiterhin die Befehlsbearbeitung.
16. Computer B empfängt einen an ihn gerichteten, von Computer A eingespeisten Synchronisationsdatensatz x ( siehe durchgezogenen Pfeil mit dem Bezugszeichen 32).
17. Computer B setzt die Ablaufzeit B vor dem Erreichen des vorgegebenen Ablaufzeitpunktes zurück, da in der Zwischenzeit rechtzeitig die erwarteten Synchronisationsdatensätze von Computer A und C empfangen werden konnten.
18. Computer B führt Verarbeitungsoperationen des eigenen Synchronisationsdatensatzes y und der empfangenen Synchronisationsdatensätze x, z durch. Insbesondere wird der Inhalt der Synchronisationsdatensätze x, y, z auf das Vorliegen von Identität überprüft. Tritt das gewünschte Ergebnis bei den Verarbeitungsoperationen auf, so wird die weitere Bearbeitung von task B fortgesetzt. Andernfalls bleibt die Befehlsbearbeitung von task B auf Computer B unterbrochen, und es kann eine anwendungsabhängige Fehlerbehandlung angestoßen werden.
19. Computer C speist einen Synchronisationsdatensatz z, welcher an den Computer B des Verbundes gerichtet ist, in die Datenschnittstelle ein ( siehe durchgezogenen Pfeil mit dem Bezugszeichen 33 ).
20. Computer C speist einen Synchronisationsdatensatz z, welcher an den Computer A des Verbundes gerichtet ist, in die Datenschnittstelle ein ( siehe strichpunktierten Pfeil mit dem Bezugszeichen 30 ).
21. Computer C startet eine Ablaufzeit C, innerhalb der ein Empfang der Synchronisationstelegramme x, y der anderen Computer A, B des Verbundes erwartet wird.
22. Computer C schaltet in einen Empfangszustand um und unterbricht die weitere Befehlsbearbeitung.
23. Computer C empfängt einen an ihn gerichteten, von Computer A eingespeisten Synchronisationsdatensatz x ( siehe punktierten Pfeil mit dem Bezugszeichen 29 ).
24. Computer C verbleibt im Empfangszustand und unterbricht weiterhin die Befehlsbearbeitung.
25. Computer C empfängt einen an ihn gerichteten, von Computer B eingespeisten Synchronisationsdatensatz y ( siehe punktierten Pfeil mit dem Bezugszeichen 29 ).
27. Computer C setzt die Ablaufzeit C vor dem Erreichen des vorgegebenen Ablaufzeitpunktes zurück, da in der Zwischenzeit rechtzeitig die erwarteten Synchronisationsdatensätze von Computer A und B empfangen werden konnten.
28. Computer C führt Verarbeitungsoperationen des eigenen Synchronisationsdatensatzes z und der empfangenen Synchronisationsdatensätze x, y durch. Insbesondere wird der Inhalt der Synchronisationsdatensätze x, y, z auf das Vorliegen von Identität überprüft. Tritt das gewünschte Ergebnis bei den Verarbeitungsoperationen auf, so wird die weitere Bearbeitung von task C fortgesetzt. Andernfalls bleibt die Befehlsbearbeitung von task C auf Computer C unterbrochen, und es kann eine anwendungsabhängige Fehlerbehandlung angestoßen werden.

Bei dem in Figur 4 dargestellten Ausführungsbeispiel ist gemäß einer weiteren Ausführungsform der Erfindung bereits berücksichtigt, daß für den Fall, daß mehr als zwei Computer über die Datenschnittstelle verbunden oder verbindbar sind, jeder Computer A, B oder C je einen an die anderen Computer im Verbund gerichteten Satz an Synchronisationsdaten einspeist, und dieser Computer in einer zur vorangegangenen Einspeisung umgekehrten Reihenfolge den Empfang eines entsprechenden Satzes an Synchronisationsdaten von den anderen Computern im Verbund erwartet. So speist in Figur 4 z.B. der Computer A je einen an den Computer C und an den Computer B im Verbund gerichteten Synchronisationsdatensatz x ein ( send C,x und send B,x ). Umgekehrt zu dieser Sendereihenfolge wird vom Computer A dann der Empfang der Synchronisationsdatensätze y und z der Computer B und C erwartet ( receive B,y und receive C,z ).

Das erfindungsgemäße Synchronisationsverfahren ist unverändert auch dann anwendbar, wenn die tasks der verbundenen Computer nicht aus identischen Folgen von Befehlsanweisungen bestehen, sondern lediglich dafür eingerichtet sind, in bestimmten Programmpunkten Daten auszutauschen bzw. sogar nur ein Computer auf die Entgegennahme von Daten vom anderen Computer eingerichtet ist.

## Patentansprüche

1. Verfahren zur Synchronisation von Programmen auf mindestens zwei Computern (A,B,C) eines Verbundes, welche über eine Datenschnittstelle (1,3,6) miteinander verbunden oder verbindbar sind, wobei ein Computer (A) des Verbundes
a) die weitere Bearbeitung der Befehle eines aktuellen Programmes (task A) unterbricht, wenn bei der Bearbeitung ein Befehl (syncpoint X,...) auftritt, der eine Synchronisation des Programmes (task A) in dem Computer (A) mit mindestens einem Programm (task B, task C) auf mindestens einem anderen Computer (B,C) des Verbundes anfordert,
b) zumindest einen Satz von Synchronisationsdaten (syncdata x, ...) für den mindestens einen anderen Computer (C,D) des Verbundes in die Datenschnittstelle (1,3,6) einspeist,
c) nach Einspeisung des zumindest einen Satzes von Synchronisationsdaten ( syncdata x,...) in einen Empfangszustand (receive) umschaltet, und
d) die weitere Bearbeitung der Befehle eines aktuellen Programmes (task A) solange unterbricht (wait), bis von dem Computer (A) zumindest ein Satz von Synchronisationsdaten (syncdata y, syncdata z) von den Programmen (task B, task C) auf mindestens einem anderen Computer (B,C) des Verbundes über die Datenschnittstelle (1,3,6) empfangen wurde.

2. Verfahren nach Anspruch 1, wobei
a) von einem Computer (A,B,C) des Verbundes nach Einspeisung von zumindest einem Satz von Synchronisationsdaten (syncdata x, ...) für mindestens einen anderen Computer des Verbundes eine interne Ablaufzeit (timeout A,...) gestartet wird, und
b) von dem einen Computer (A,B,C) für den Fall, daß bis zum Ende der Ablaufzeit (timeout A, timeout B) kein Satz von Synchronisationsdaten von mindestens einem anderen Computer (A,B,C) empfangen wurde, vorgegebene Befehlsanweisungen ausgeführt werden, insbesondere eine Meldung generiert und/oder die Bearbeitung der Befehle des aktuellen Programmes (task A) endgültig abgebrochen wird, bzw.
c) andernfalls von dem einen Computer (A,B,C) die interne Ablaufzeit (timeout A) rückgesetzt und die Bearbeitung der Befehle des aktuellen Programmes (task A,...) fortgesetzt wird.

3. Verfahren nach einem der vorangegangenen Ansprüche, wobei für den Fall, daß mehr als zwei Computer über die Datenschnittstelle verbunden oder verbindbar sind,
a) ein Computer (A,...) im Verbund jeweils mindestens einen an je einen anderen Computer (B,C) im Verbund gerichteten Satz an Synchronisationsdaten ( send 3,x , send 2,x, ... ) einspeist, und
b) dieser Computer (A,...) in einer zur vorangegangenen Einspeisung umgekehrten Reihenfolge den Empfang eines entsprechenden Satzes an Synchronisationsdaten von den anderen Computern im Verbund erwartet ( receive 2, x , receive 3, x , ... ).

## Claims

1. Method for synchronization of programs on at least two computers (A, B, C) in a network, which are connected or can be connected to one another via a data interface (1, 3, 6), in which case one computer (A) in the network
a) interrupts the further processing of the instructions in a program (task A) that is running when, during the processing, an instruction (syncpoint X,...) occurs which requests synchronization of the program (task A) in the computer (A) to at least one program (task B, task C) on at least one other computer (B, C) in the network,
b) feeds into the data interface (1, 3, 6) at least one set of synchronization data (syncdata x,...) for the at least one other computer (C, D) in the network,
c) after feeding in the at least one set of synchronization data (syncdata x,...), switches to the receive state (receive), and
d) interrupts the further processing of the instructions in the program (task A) which is running (wait) until the computer (A) has received, via the data interface (1, 3, 6), at least one set of synchronization data (syncdata y, syncdata z) from the programs (task B, task C) on at least one other computer (B, C) in the network.

2. Method according to Claim 1, in which case
a) after feeding in at least one set of synchronization data (syncdata x,...) for at least one other computer in the network, one computer (A, B, C) in the network starts an internal timeout (timeout A,...), and
b) in the situation when no set of synchronization data has been received from at least one other computer (A, B, C) before the end of the timeout (timeout A, timeout B), the one computer (A, B, C) carries out predetermined command instructions, in particular generates a message and/or finally interrupts the processing of the instructions in the program (task A) which is running, or
c) otherwise, the one computer (A, B, C) resets the internal timeout (timeout A) and continues to process the instructions in the program (task A,...) which is running.

3. Method according to one of the preceding claims, in which case, in the situation when more than two computers are connected or can be connected via the data interface,
a) one computer (A, ...) in the network in each case feeds in at least one set of synchronization data (send 3,x, send 2,x,...), which is directed at in each case one other computer (B, C) in the network, and
b) this computer (A, ...) waits (receive 2,x, receive 3,x,...) for the reception of a corresponding set of synchronization data from the other computers in the network, in the opposite sequence to that previously used for feeding in.

## Revendications

1. Procédé pour la synchronisation de programmes dans au moins deux ordinateurs (A, B, C) d'un système qui sont reliés ou peuvent être reliés ensemble par l'intermédiaire d'une interface de données (1, 3, 6), dans lequel un ordinateur (A) du système
a) interrompt la suite du traitement des instructions d'un programme actuel (task A) lorsqu'il apparaît lors du traitement une instruction (syncpoint X, ...) qui demande une synchronisation du programme (task A) dans l'ordinateur (A) avec au moins un programme (task B, task C) dans au moins un autre ordinateur (B, C) du système,
b) introduit au moins un bloc de données de synchronisation (syncdata x, ...) dans l'interface de données (1, 3, 6) pour un autre ordinateur ou d'autres ordinateurs (B, C) du système,
c) commute dans un état de réception (receive) après l'introduction du ou des blocs de données de synchronisation (syncdata x, ...), et
d) interrompt (wait) la suite du traitement des instructions d'un programme actuel (task A) jusqu'à ce que l'ordinateur (A) ait reçu par l'intermédiaire de l'interface de données (1, 3, 6) au moins un bloc de données de synchronisation (syncdata y, syncdata z) provenant des programmes (task B, task C) dans au moins un autre ordinateur (B, C) du système.

2. Procédé selon la revendication 1, dans lequel
a) après l'introduction d'au moins un bloc de données de synchronisation (syncdata x, ...) pour au moins un autre ordinateur du système, un ordinateur (A, B, C) du système déclenche une temporisation interne (timeout A,...) et
b) l'ordinateur (A, B, C), pour le cas où aucun bloc de données de synchronisation d'au moins un autre ordinateur (A, B, C) n'a été reçu avant la fin de la temporisation (timeout A, timeout B), exécute des instructions prescrites, produit notamment un message et/ou interrompt définitivement le traitement des instructions du programme actuel (task A) ou,
c) sinon, l'ordinateur (A, B, C) remet à l'état initial la temporisation interne (timeout A) et poursuit le traitement des instructions du programme actuel (task A, ...).

3. Procédé selon l'une des revendications précédentes, dans lequel, pour le cas où plus de deux ordinateurs sont reliés ou peuvent être reliés par l'intermédiaire de l'interface de données,
a) un ordinateur (A, ...) dans le système introduit à chaque fois au moins un bloc de données de synchronisation (send 3, x ; send 2, x ; ...) adressé à chaque fois à un autre ordinateur (B, C) du système, et
b) cet ordinateur (A, ...) attend, dans un ordre inverse de l'ordre d'introduction précédent, la réception des blocs de données de synchronisation correspondants provenant des autres ordinateurs dans le système (receive 2, x ; receive 3, x ; ...).
